(19) Europäisches Patentamt
European Patent Office
Office européen des brevets

(11) **EP 3 049 171 B1**

(12) **EUROPÄISCHE PATENTSCHRIFT**

(45) Veröffentlichungstag und Bekanntmachung des Hinweises auf die Patenterteilung:
**19.04.2017   Patentblatt 2017/16**

(51) Int Cl.:
***B01D 39/16*** *(2006.01)*

(21) Anmeldenummer: **15744878.8**

(22) Anmeldetag: **16.07.2015**

(86) Internationale Anmeldenummer:
**PCT/EP2015/001464**

(87) Internationale Veröffentlichungsnummer:
**WO 2016/020039 (11.02.2016 Gazette 2016/06)**

(54) **FILTERMATERIAL UND FILTERMATERIALKOMBINATION ZUR ABTRENNUNG VON FLÜSSIGKEITEN UND DARAUS HERGESTELLTE FILTERELEMENTE**

FILTER MATERIAL AND FILTER MATERIAL COMBINATION FOR SEPARATING LIQUIDS AND FILTER ELEMENTS PRODUCED THEREFROM

MATÉRIAU FILTRANT ET COMBINAISON DE MATÉRIAUX FILTRANTS SERVANT À ISOLER DES LIQUIDES ET ÉLÉMENTS FILTRANTS FABRIQUÉS À PARTIR DUDIT MATÉRIAU FILTRANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.08.2014   DE 102014011715**

(43) Veröffentlichungstag der Anmeldung:
**03.08.2016   Patentblatt 2016/31**

(73) Patentinhaber: **Neenah Gessner GmbH**
**83052 Bruckmühl (DE)**

(72) Erfinder:
• **HÖRL, Werner**
**83620 Feldkirchen / Westerham (DE)**
• **DEMMEL, Andreas**
**83620 Feldkirchen / Westerham (DE)**
• **HÄRINGER, Christoph**
**87642 Halblech (DE)**
• **NIENTIEDT, Jürgen**
**83109 Grosskarolinenfeld (DE)**

(74) Vertreter: **Bauer, Friedrich et al**
**Andrae I Westendorp**
**Patentanwälte Partnerschaft**
**Adlzreiterstrasse 11**
**83022 Rosenheim (DE)**

(56) Entgegenhaltungen:
**DE-A1-102009 006 586     DE-A1-102012 219 409**

**Beschreibung**

Die Erfindung betrifft ein Filtermaterial zur Abtrennung von Flüssigkeiten aus Fluidströmen gemäß dem Oberbegriff des Anspruchs 1, eine Filtermaterialkombination gemäß dem Oberbegriff des Anspruchs 12 und ein Filterelement gemäß Anspruch 17.

**Stand der Technik**

In vielen Bereichen haben Filtersysteme die Aufgabe, Flüssigkeiten aus Fluidströmen abzutrennen. So muss zum Beispiel bei der Herstellung von Pressluft die verdichtete Luft von Öl- und Wassernebeln befreit werden, bevor sie weiterverwendet werden kann.

Eine weitere Anwendung ist die Abtrennung von Flüssigkeitströpfchen aus einem System von zwei nicht miteinander mischbaren Flüssigkeiten, wie zum Beispiel die Abtrennung von fein verteilten Wassertröpfchen aus Kraftstoffen, insbesondere Dieselkraftstoffen.

Unter nicht mischbaren Flüssigkeiten werden solche Flüssigkeiten verstanden, die keine homogene Mischung oder Lösung miteinander bilden, sondern ein Zwei-PhasenGemisch, wie z.B. Öl und Wasser. Im Sinne der Erfindung gelten zwei Flüssigkeiten dann nicht miteinander mischbar, wenn sich bei Raumtemperatur (20°C) höchstens 10 Gew.% der einen Flüssigkeit in der jeweils anderen Flüssigkeit, bezogen auf 100 Gew.% der zwei nicht miteinander mischbaren Flüssigkeiten, lösen.

Unter Fluiden sind Flüssigkeiten oder Gase oder Mischungen daraus zu verstehen.

Nachdem die Tröpfchen der abzuscheidenden Flüssigkeit meist sehr fein verteilt im Fluidstrom vorhanden sind, wird üblicherweise versucht, die Tröpfchen durch Adsorption an einem geeigneten Filtermaterial zu sammeln und dabei gleichzeitig zu vergrößern. Diese vergrößerten Tröpfchen treffen dann auf ein in Durchströmungsrichtung gesehen zweites Filtermedium. Dieses zweite Filtermedium ist durch entsprechende Oberflächenenergie für die Flüssigkeitströpfchen undurchdringbar. Die Flüssigkeitströpfchen werden daher an der stromaufwärts liegenden Oberfläche des zweiten Filtermaterials abgeschieden und üblicherweise mittels Schwerkraft ausgetragen. Filtermaterialien für die Filtration von Fluiden sind üblicherweise mit einem Bindemittel imprägniert. Die Imprägnierung verleiht dem Filtermaterial eine hohe Steifigkeit und eine Beständigkeit gegenüber aggressiven Flüssigkeiten, wie zum Beispiel heißen Motorölen, Hydraulikölen, Kraftstoffen, Säuren und Laugen. Da die meisten Filtermaterialien in einem weiteren Verarbeitungsschritt gefaltet werden, ist eine hohe Steifigkeit gefordert. Steife Filtermaterialien lassen sich leichter falten und die Falten widerstehen dem Filtrationsdruck auch unter hohen Durchflussraten und Temperaturen.

Die US 3,890,123 A1 beschreibt ein Filtersystem zur Abscheidung von Flüssigkeitströpfchen aus einem Gasstrom. In der EP 1 606 037 A1 wird ein Filtersystem zur Abtrennung von Wasser aus Kraftstoff offenbart.

DE 10 2009 006586 A1 offenbart ein Filtermedium, zur Trennung einer wässrigen Flüssigkeit von einer nicht wässrigen Flüssigkeit eines Gemisches, welches aus einer einzigen imprägnierten hydrophilen Filtrationslage aufgebaut sein kann. Das hydrophile Imprägniermittel ist derart ausgewählt, dass die wässrige Flüssigkeit des Gemisches die nicht wässrige Flüssigkeit von der Oberfläche der hydrophilen Lage verdrängt. Zusätzlich kann eine hydrophobe Schicht zur Verbesserung der Wasserabscheidung enthalten sein. Diese hydrophobe Schicht ist von der hydrophilen Filtrationslage durch einen Abstandshalter getrennt.

Der Nachteil der bisherigen Filtermaterialien zur Abscheidung von Flüssigkeiten aus Fluidströmen besteht darin, dass sie aus mindestens zwei unterschiedlichen Filtermedien bestehen. Die Verwendung von mindestens zwei Lagen führt zu einem verhältnismäßig dicken Filtermaterial. Je dicker das Filtermaterial jedoch ist, desto geringer ist die Filterfläche in einem Filterelement mit vorgegebener Größe. Außerdem ist die Herstellung von Filtermaterialien aus mindestens zwei Filtermedienlagen aufwändig und kostenintensiv.

Aufgabe der vorliegenden Erfindung ist es daher, ein Filtermaterial zur Abtrennung von Flüssigkeiten aus Fluidströmen bereitzustellen, das eine geringe Dicke aufweist und kostengünstig herzustellen ist. Ferner sollen eine Filtermaterialkombination mit einem derartigen Filtermaterial und ein daraus hergestelltes Filterelement geschaffen werden.

**Zusammenfassung der Erfindung**

Diese Aufgabe wird erfindungsgemäß durch die Merkmale der Ansprüche 1, 15 und 22 gelöst. Vorteilhafte Ausführungsformen der Erfindung sind in den weiteren Ansprüchen beschrieben.

**Detaillierte Beschreibung der Erfindung**

Das erfindungsgemäße Filtermaterial umfasst zumindest ein Material ausgewählt aus der Gruppe bestehend aus nassgelegten Vliesen, trockengelegten Vliesen, Geweben und offenzelligen Schäumen, wobei die beiden Seiten des Filtermaterials mit zwei unterschiedlichen Bindemitteln in einer Weise imprägniert sind, dass die erste Seite des Filtermaterials eine höhere Oberflächenenergie und damit kürzere Tropfeneinsinkzeit aufweist als die zweite, gegenüberliegende Seite.

Die Begriffe "erste Seite" und "zweite Seite" sind im Rahmen der vorliegenden Erfindung unabhängig von der Anströmrichtung des Filtermaterials zu verstehen.

Unter dem Begriff Bindemittel sind entweder das Bindemittel alleine oder die Kombination des Bindemittels mit einem oder mehreren oberflächenenergieverändernden Additiven gemeint.

Das erfindungsgemäße Filtermaterial ist flächig, d.h. es besitzt zwei gegenüberliegende Seiten oder Oberflächen, die bevorzugt parallel zueinander angeordnet sind.

Während sich zur Auswahl eines geeigneten Bindemittels die Messung des Kontaktwinkels gut eignet, wird für die Bestimmung der Oberflächenenergie eines imprägnierten Filtermaterials wegen seiner unregelmäßigen Oberfläche die Tropfeneinsinkzeit nach AATCC 18 bevorzugt.

Nassgelegte Vliese oder Papiere im Sinne dieser Erfindung sind alle Vliese, die mit den in der Fachwelt bekannten Nasslegeprozessen zur Herstellung von Filterpapieren erzeugt werden können. Die Papiere für das erfindungsgemäße Filtermaterial bestehen aus natürlichen, synthetischen, anorganischen Fasern oder einer Mischung daraus. Beispiele für natürliche Fasern sind Zellulose, Baumwolle, Wolle, Hanf, wobei das eingesetzte Zellulosematerial holzfreie und/oder holzhaltige Zellulosen von Nadel- und/oder Laubbäumen, Regeneratzellulosen und fibrillierte Zellulosen sein kann. Anorganische Fasern sind zum Beispiel Glasfaser, Basaltfasern, Quarzfasern und Metallfasern. Als Synthesefasern eignen sich zum Beispiel Polyesterfasern, Polypropylenfasern, Mehrpomponentenfasern mit unterschiedlichen Schmelzpunkten der einzelnen Komponenten, Polyamidfasern und Polyacrylnitrilfasern. Der Titer der Synthesefasern beträgt typischerweise 0,1 dtex - 8,0 dtex, bevorzugt 0,5 dtex - 5 dtex und die Schnittlänge typischerweise 3 mm - 20 mm, bevorzugt 4 mm - 12 mm. Die Papiere für das erfindungsgemäße Filtermaterial können entweder zu 100% aus natürlichen, synthetischen oder anorganischen Fasern bestehen, es ist aber auch jede beliebige Mischung aus diesen Faserarten möglich. Die richtige Zusammensetzung weiß der Fachmann auf Grund seines Wissens und seiner Erfahrung jeweils nach den geforderten Papiereigenschaften gezielt auszuwählen. Die Papierlage kann aus mehreren Schichten bestehen, die entweder in einer Papiermaschine mit einem dazu geeigneten Stoffauflauf erzeugt und zusammengeführt werden oder aus einzelnen Papierbahnen, die miteinander in einem separaten Arbeitsgang verbunden werden. Die einzelnen Schichten können dabei in ihren Eigenschaften unterschiedlich ausgestaltet sein.

Unter trockengelegten Vliesen sind u.a. trockengelegte Stapelfaservliese, Meltblownvliese und Spinnvliese zu verstehen.

Trockengelegte Stapelfaservliese bestehen aus Fasern mit endlicher Länge. Zur Herstellung von trockengelegten Stapelfaservliesen können sowohl natürliche als auch synthetische Fasern zum Einsatz kommen. Beispiele für natürliche Fasern sind Zellulose, Wolle, Baumwolle, Flachs. Synthetische Fasern sind zum Beispiel Polyolefinfasern, Polyesterfasern, Polyamidfasern, Polytetrafluorethylenfasern, Polyphenylensulfidfasern. Die eingesetzten Fasern können entweder gerade oder gekräuselt sein. Zur Verfestigung kann das luftgelegte Stapelfaservlies ein- oder mehrkomponentige Schmelzbindefasern enthalten, die bei einer Temperatur unterhalb der Schmelztemperatur der anderen Fasern ganz oder teilweise aufschmelzen und das Vlies verfestigen. Die Herstellung der luftgelegten Stapelfaservliese erfolgt nach dem bekannten Stand der Technik wie im Buch "Vliesstoffe, W. Albrecht, H. Fuchs, Wiley-VCH, 2012" beschrieben. Die trockengelegten Stapelfaservliese können durch die bereits erwähnten ein- oder mehrkomponentigen Schmelzbindefasern verfestigt werden. Weitere Verfestigungsmöglichkeiten sind zum Beispiel Vernadeln, Wasserstrahlvernadeln oder das Tränken oder Besprühen des Vlieses mit flüssigen Bindern mit anschließender Trocknung.

Meltblownvliese bestehen aus polymeren Endlosfasern. Zur Herstellung der Meltblownvliese für das erfindungsgemäße Filtermaterial wird der in der Fachwelt bekannte Meltblownprozess verwendet, wie er z.B. in Van A. Wente, "Superfine Themoplastic Fibers", Industrial Engineering Chemestry, Vol. 48, S.1342 - 1346 beschrieben ist. Geeignete Polymere sind zum Beispiel Polycarbonat, Polyethylenterephthalat, Polybutylenterephthalat, Polyethylennaphthalat, Polybutylennaphthalat, Polyamid, Polyphenylensulfid, Polyolefin, Polyurethan. Die Fasern können aus einer oder mehreren Komponenten bestehen. Die typischen Faserdurchmesser bewegen sich dabei zwischen 0,5 - 10 $\mu$m, bevorzugt zwischen 0,5 - 3 $\mu$m. Den Polymeren können je nach Anforderungen noch Additive, wie zum Beispiel Kristallisationsbeschleuniger oder Farben, zugemischt werden. Außerdem können die Meltblownvliese, falls erforderlich, mittels eines Kalanders verdichtet werden.

Spinnvliese bestehen ebenfalls aus polymeren Endlosfasern, deren Faserdurchmesser aber meistens deutlich größer ist als der von Meltblownfasern. Spinnvliese werden nach dem der Fachwelt bekannten Spinnvliesverfahren hergestellt, wie es zum Beispiel in den Patentschriften US 4,340,563A, US 3,802,817A, US 3,855,046A und US 3,692,618A beschrieben ist. Für das Spinnvliesverfahren geeignete Polymere sind z.B. Polyethylenterephthalat, Polybutylenterephthalat, Polyethylennaphthalat, Polybutylennaphthalat, Polyamid, Polyphenylensulfid, Polyolefin.

Unter Schäume sind alle offenzelligen Schäume aus organischen Polymeren zu verstehen. Durch ihre offenzellige Struktur sind sie luftdurchlässig und eignen sich für verschiedenste Filtrationsaufgaben. Die Herstellung geeigneter Schäume ist beispielhaft in den Schriften US 3 171 820 A, DE 1504551 A, DE 601435 A und GB 1111928 A beschrieben.

Das erfindungsgemäße Filtermaterial ist dabei mit unterschiedlichen Bindemitteln so imprägniert, dass sich seine beiden Oberflächen in ihren Oberflächenenergien unterscheiden. Zum Beispiel besitzt für die Abscheidung von Wassertröpfchen aus Kraftstoffen die Seite des erfindungsgemäßen Filtermaterials, die in Durchströmungsrichtung als erste angeströmt wird, eine hohe Oberflächenenergie, während die Oberflächenenergie der Gegenseite niedrig ist.

Der Begriff hohe und niedrige Oberflächenenergie ist immer im Zusammenhang mit der Trennaufgabe zu sehen. Eine hohe Oberflächenenergie bewirkt immer eine Benetzung der Oberfläche des erfindungsgemäßen Filtermaterials mit der Flüssigkeit, die abgeschieden werden soll. Eine niedrige Oberflächenenergie hingegen verhindert die Benetzung der Oberfläche des erfindungsgemäßen Filtermaterials und wirkt somit im bevorzugten Fall als Sperrschicht, durch die die abzuscheidende Flüssigkeit nicht hindurchtreten kann. Der Fachmann weiß auf Grund seines Wissens die richtige Abstimmung von flüssigkeitssammelnden (hohe Oberflächenenergie) und flüssigkeitsabstoßenden (niedrige Oberflächenenergie) Eigenschaften des erfindungsgemäßen Filtermaterials auszuwählen.

Bindemittel mit hoher Oberflächenenergie sind zum Beispiel halogen- und silikonfreie Polymerdispersionen, Polyvinylalkohol, Melamin-Formaldehyd-Harz, Harnstoff-Formaldehyd-Harze, hydrophile Phenol- und Epoxidharze oder Mischungen daraus. Bei Bedarf können diese Bindemittel noch mit Additiven versetzt werden, die die Oberflächenenergie weiter erhöhen, wie zum Beispiel Tenside. Die Zugabemenge beträgt dabei 0,01 - 5 Gew.%, bevorzugt 0,01 - 1 Gew.%, bezogen auf das trockene Bindemittel. Bevorzugt sind dabei Additive, die entweder in den bei der Filtration verwendeten Fluiden unlöslich sind oder mit dem Bindemittel vernetzen. Solche Additive sind z.B. nichtionische, anionische, kationische und amphotere Tenside.

Bindemittel mit niedriger Oberflächenenergie sind zum Beispiel halogen- und silikonhaltige Polymerdispersionen, Polyvinylchloridharze, Polyvinylidenchloridharze, Polyvinylidenfluoridharze, Silikonharze, Phenol- und Epoxidharze oder Mischungen daraus. Bei Bedarf können diese Bindemittel noch mit Additiven versetzt werden, die die Oberflächenenergie weiter erniedrigen, wie zum Beispiel halogenhaltige Tenside, Siliconöle, Wachse, Fluorkohlenwasserstoffe und Parafinemulsionen, Zirkoniumsalze. Die Zugabemenge beträgt dabei 0,01 - 10 Gew.%, bevorzugt 0,01 - 3 Gew% bezogen auf das trockene Bindemittel. Bevorzugt sind dabei Additive, die entweder in den bei der Filtration verwendeten Fluiden unlöslich sind oder mit dem Bindemittel vernetzen. Solche Additive sind z.B. reaktive Silikonharze und reaktive Silikonverbindungen.

Die Bindemittel können in der Form von zum Beispiel Dispersionen (Latices), Lösungen oder Pulvern vorliegen.

Bindemittel mit einer hohen Oberflächenenergie haben einen Kontaktwinkel von höchstens 50°, bevorzugt von höchstens 20°. Bindemittel mit einer niedrigen Oberflächenenergie haben einen Kontaktwinkel von mindestens 60°, bevorzugt von mindestens 90°.

Bevorzugt beträgt die Tropfeneinsinkzeit der ersten Seite höchstens 80%, besonders bevorzugt höchstens 50%, der Tropfeneinsinkzeit der zweiten Seite.

Eine Möglichkeit zur Herstellung des erfindungsgemäßen Filtermaterials besteht in der vollständigen Durchimprägnierung des Filtermaterials mit einem ersten Bindemittel. Dabei ist es unerheblich, ob das erste Bindemittel eine hohe oder eine niedrige Oberflächenenergie besitzt. Bevorzugt hat das erste Bindemittel jedoch eine hohe Oberflächenenergie. Anschließend wird das erfindungsgemäße Filtermaterial auf nur einer Seite mit dem zweiten Bindemittel in einer Weise imprägniert, dass die beiden Oberflächen des Filtermaterials unterschiedliche Oberflächenenergien aufweisen. Das zweite Bindemittel hat eine zum ersten Bindemittel unterschiedliche Oberflächenenergie. Bevorzugt hat das zweite Bindemittel eine niedrigere Oberflächenenergie als das erste. Bei Filtermaterialien mit zwei unterschiedlichen Oberflächen wählt der Fachmann auf Grund der Anforderungen an das erfindungsgemäße Filtermaterial die am besten geeignete Oberfläche für die zweite Imprägnierung aus. Vor der Imprägnierung mit dem zweiten Bindemittel kann das erste Bindemittel getrocknet bzw. aufgeschmolzen und, falls gewünscht, vernetzt werden. Das zweite Bindemittel kann dann separat getrocknet bzw. aufgeschmolzen und, falls gewünscht, vernetzt werden. Es ist jedoch auch möglich, das Filtermaterial zuerst mit beiden Bindemitteln zu imprägnieren und dann beide Bindemittel gemeinsam zu trocknen bzw. aufzuschmelzen und, falls gewünscht, zu vernetzen.

Das erfindungsgemäße Filtermaterial hat nach dem vollständigen Imprägnieren mit dem ersten Bindemittel einen Harzgehalt von vorzugsweise 1 - 30 %, besonders bevorzugt von 5 - 20 % und nach dem einseitigen Imprägnieren mit dem zweiten Bindemittel einen Gesamtharzgehalt von vorzugsweies 2 - 50 %, besonders bevorzugt von 5 - 30 %. Der Gesamtharzgehalt ist der Harzgehalt des ersten und des zweiten Bindemittels zusammen.

Geeignete Verfahren für die vollständige Imprägnierung des erfindungsgemäßen Filtermaterials mit dem ersten Bindemittel sind zum Beispiel die Tauchimprägnierung, die Leimpressenimprägnierung, der beidseitige Walzenauftrag, der beidseitige Sprühauftrag, oder der ein - oder beidseitige Pulverauftrag. Die zweite, einseitige Imprägnierung des durchimprägnierten Filtermaterials mit dem zweiten Bindemittel erfolgt zum Beispiel durch einen einseitigen Walzenauftrag, ein Rollrakel, einen Sprühauftrag oder einem einseitigen Pulverauftrag.

Die zweite Möglichkeit zur Herstellung des erfindungsgemäßen Filtermaterials besteht in einer beidseitigen Imprägnierung. Dabei wird eine Oberfläche mit einem ersten Bindemittel imprägniert und die zweite Oberfläche mit einem zweiten Bindemittel. Das erste Bindemittel hat eine andere Oberflächenenergie als das zweite Bindemittel. Der Auftrag des ersten und des zweiten Bindemittels wird zum Beispiel über die Viskosität der Bindemittellösung oder durch geeignete Einstellungen der Verfahrensparameter vorzugsweise so gesteuert, dass wenigstens eines der beiden Bindemittel das Filtermaterial mindestens bis zur Hälfte aber höchstens bis drei Viertel seiner Dicke durchdringt. Besonders bevorzugt durchdringt jedes der beiden Bindemittel das Filtermaterial mindestens bis zur Hälfte aber höchstens bis drei Viertel seiner Dicke. Vor der Imprägnierung mit dem zweiten Bindemittel kann das erste Bindemittel getrocknet bzw. aufgeschmolzen und, falls gewünscht, vernetzt werden. Das zweite Bindemittel kann dann separat getrocknet bzw. aufgeschmolzen und, falls gewünscht, vernetzt werden. Es ist jedoch auch möglich, beide Bindemittel gemeinsam nach dem Auftrag des zweiten Bindemittels zu trocknen bzw. aufzuschmelzen und, falls gewünscht, zu vernetzen.

Das erfindungsgemäße Filtermaterial hat nach dem Imprägnieren mit dem ersten Bindemittel einen Harzgehalt von vorzugsweise 1 - 30 %, besonders bevorzugt von 5 - 20 % und nach dem Imprägnieren mit dem zweiten Bindemittel einen Gesamtharzgehalt von vorzugsweise 2 - 50 %, besonders bevorzugt von 5 - 30 %. Der Gesamtharzgehalt ist der Harzgehalt des ersten und des zweiten Bindemittels zusammen.

Geeignete Verfahren für die beidseitige Imprägnierung sind zum Beispiel der beidseitige Walzenauftrag, der beidseitige Sprühauftrag, der beidseitige Auftrag mittels Rollrakel oder der beidseitige Pulverauftrag.

Eine bevorzugte Ausführungsform des erfindungsgemäßen Filtermaterials ist ein Papier aus natürlichen Fasern, Synthesefasern, anorganischen Fasern oder Mischungen daraus, das auf einer Seite mit einem ersten Bindemittel in der Weise imprägniert ist, dass das erste Bindemittel etwa zwei Drittel der Papierdicke durchdringt, und auf der Gegenseite mit einem zweiten Bindemittel in der Weise imprägniert ist, dass das zweite Bindemittel ebenfalls etwa zwei Drittel der Papierdicke durchdringt. Dieses Filtermaterial hat eine Flächenmasse von 50 g/m$^2$ - 400 g/m$^2$, bevorzugt von 100 g/m$^2$ - 300 g/m$^2$, eine Dicke von 0,1 mm - 2,0 mm; bevorzugt von 0,5 mm - 1,5 mm, eine Luftdurchlässigkeit von 1 l/m$^2$s - 1500 l/m$^2$ s, bevorzugt von 5 l/m$^2$s - 800 l/m$^2$s, eine Porosität von 50 % - 90 %, bevorzugt von 60 % - 80 %, einen Harzgehalt für das erste Bindemittel von 1 - 30 %, bevorzugt von 5 - 20 %, einen Gesamtharzgehalt von 2 % - 30 %, bevorzugt von 5 % - 50 %, und eine Tropfeneinsinkzeit, gemessen an der einen Seite, von höchstens 80%, bevorzugt von höchstens 60% der Tropfeneinsinkzeit, gemessen an der gegenüberliegenden Seite.

Im Rahmen der Erfindung ist es ohne weiteres möglich, dass das erfindungsgemäße Filtermaterial aus mehreren Lagen bzw. Schichten besteht. Weiterhin ist es auch möglich, dass vor und/oder nach dem erfindungsgemäßen Filtermaterial eine oder mehrere Lagen aus anderen Materialien, insbesondere aus einem Vliesmaterial vorgesehen sind.

Eine bevorzugte Ausführungsform ist dabei eine Kombination des erfindungsgemäßen Filtermaterials mit einem Meltblown- oder Spinnvlies. Das Meltblown- oder Spinnvliesvlies hat eine Flächenmasse von 5 g/m$^2$ - 300 g/m$^2$, bevorzugt von 10 g/m$^2$ - 150 g/m$^2$, eine Dicke von 0,1 mm - 3,0 mm, bevorzugt von 0,1 mm - 1,0 mm und eine Luftdurchlässigkeit von 5 l/m$^2$s - 3000 l/m$^2$s, bevorzugt von 10 l/m$^2$s - 2000 l/m$^2$s. Wenigstens ein Teil der Fasern des Vlieses umfassen bevorzugt Polyamidfasern, Polyethylenterephthalatfasern, Polybutylenterephthalatfaser, Mehrkomponentenfasern und Mischungen daraus. Bevorzugt ist das Vlies mit der Seite des erfindungsgemäßen Filtermaterials verbunden, die die kürzere Tropfeneinsinkzeit aufweist. Eine Anordnung der Vlieslage auf der Seite mit der längeren Tropfeneinsinkzeit ist jedoch ebenfalls möglich. Je nach Anforderung kann das Vlies mittels eines Kalanders verdichtet sein.

Eine weitere bevorzugte Ausführungsform ist dabei eine Kombination des erfindungsgemäßen Filtermaterials mit einem trockengelegten Stapelfaservlies. Das trockengelegte Stapelfaservlies hat eine Flächenmasse von 5 g/m$^2$ - 300 g/m$^2$, bevorzugt von 50 g/m$^2$ - 250 g/m$^2$, eine Dicke von 0,1 mm - 3,0 mm, bevorzugt von 0,3 mm - 2,0 mm und eine Luftdurchlässigkeit von 5 l/m$^2$s - 4000 l/m$^2$s, bevorzugt von 50 l/m$^2$s - 3000 l/m$^2$s. Wenigstens ein Teil der Fasern des trockengelegten Stapelfaservlieses umfassen bevorzugt Zellulose, Wolle, Baumwolle, Polyolefinfasern, Polyesterfasern, Polyamidfasern, Polytetrafluorethylenfasern, Polyphenylensulfidfasern, Mehrkomponentenfasern und Mischungen daraus. Bevorzugt ist das trockengelegte Stapelfaservlies mit der Seite des erfindungsgemäßen Filtermaterials verbunden, die die kürzere Tropfeneinsinkzeit aufweist. Eine Anordnung der Vlieslage auf der Seite mit der längeren Tropfeneinsinkzeit ist jedoch ebenfalls möglich.

Die einzelnen Lagen werden entweder mit einem Kleber oder über Schweißverbindungen oder eine Kombination daraus verbunden.

Vorteilhafte Kleber haben einen Erweichungspunkt von über 200 °C. Bei der bestimmungsgemäßen Verwendung wird das erfindungsgemäße Filtermaterial Temperaturen bis 150 °C und hohen hydrostatischen Drücken ausgesetzt. Dabei darf sich die Kleberverbindung nicht lösen. Geeignete Kleber für diese Anwendung sind Polyurethankleber, Polyamidkleber oder Polyesterkleber. Besonders bevorzugt sind dabei Polyurethankleber, die mit der Luftfeuchtigkeit vernetzen. Die Kleber können entweder als Pulver oder aufgeschmolzen mittels Rasterwalzen oder Sprühdüsen aufgebracht werden. Das Auftragsgewicht des Klebers liegt typischerweise zwischen 5 - 20 g/m$^2$, bevorzugt zwischen 5 - 10 g/m$^2$.

Die Schweißverbindung kann sowohl durch eine Ultraschallanlage als auch durch einen Thermokalander erfolgen. Dabei werden die Polymere der zu verschweißenden Lagen entweder vollflächig oder bereichsweise aufgeschmolzen und miteinander verschweißt. Die bereichsweisen Schweißverbindungen können dabei beliebige geometrische Formen haben, wie zum Beispiel Punkte, gerade Linien, gekrümmte Linien, Rauten, Dreiecke, usw. Die Fläche der bereichsweisen Schweißverbindungen beträgt vorteilhafterweise höchstens 10% der Gesamtfläche des erfindungsgemäßen Filtermaterials.

Verkleben und Verschweißen können auch beliebig miteinander kombiniert werden.

Das erfindungsgemäße Filtermaterial kann zu allen üblichen Elementformen weiterverarbeitet werden. So können daraus z.B. Schläuche, Taschen oder Beutel gefertigt werden. Oder es kann auf allen üblichen Verarbeitungsmaschinen geprägt, gefaltet, in Querrichtung gewellt, in Längsrichtung rilliert, usw. werden.

Prüfmethoden

Flächenmasse nach DIN EN ISO 536

Dicke nach DIN EN ISO 534

Luftdurchlässigkeit nach DIN EN ISO 9237 bei 200 Pa Druckdifferenz

Die Porosität berechnet sich aus der tatsächlichen Dichte des Filtermediums und der durchschnittlichen Dichte der eingesetzten Fasern nach folgender Formel:

$$\text{Porosität} = (1 - \text{Dichte Filtermedium [g/cm}^3] / \text{Dichte Fasern [g/cm}^3]) * 100\%$$

Der Anteil des Bindemittels in einem Papier (Harzgehalt) berechnet sich nach folgender Formel:

$$\text{Harzgehalt in \%} = (\text{FM Imp.}/\text{FM Papier}) * 100\%$$

mit

FM Imp. = Masse des trockenen Bindemittels pro m$^2$ Papier
FM Papier = Flächenmasse des imprägnierten Papiers

Kontaktwinkel

Als Kontaktwinkel wird der Winkel bezeichnet, den der Rand eines Flüssigkeitstropfens auf der Oberfläche eines Feststoffes zu dieser Oberfläche bildet. Je geringer der Kontaktwinkel ist, desto stärker wird der Feststoff durch die Flüssigkeit benetzt. Wird Wasser als Testflüssigkeit verwendet, so bezeichnet man den Feststoff als umso hydrophiler, je kleiner der Kontaktwinkel ist. Für die Messung nach der vorliegenden Lehre wurde als Testflüssigkeit destilliertes Wasser verwendet. Der Festkörper, an dem der Kontaktwinkel gemessen wurde, war ein geschlossener, glatter, trockener Film der zu prüfenden Imprägnierung auf einer Glasplatte. Sowohl das destillierte Wasser als auch die zu prüfenden Imprägniermittelfilme wurden vor der Messung 24h lang im Normklima nach DIN EN ISO 20187 gelagert. Gemessen wurde mit einem Krüss Kontaktwinkelmess-gerät G1. Verwendet wurde die direkte Messung, deren Durchführung in der Bedienungsanleitung beschrieben ist.

Tropfeneinsinkzeit mit Methanol - Wasser Abmischungen nach AATCC 118 (American Association of Textil Chemists and Colorists). Die Volumenverhältnisse von Methanol und destilliertem Wasser werden je nach Oberflächenenergie des Filtermaterials so ausgewählt, dass sich Unterschiede in der Tropfeneinsinkzeit zwischen den beiden Seiten erkennen lassen.

Wasserabscheidung nach ISO 16332 mit den Testbedingungen nach Tabelle 1, gemessen an Flachproben.

Tabelle 1

| Messtemperatur | 23 °C ± 2 °C |
|---|---|
| Messflüssigkeit | Handelsüblicher Dieselkraftstoff mit einer Oberflächenspannung von 15 mN/m ± 3 mN/m |

| Druckdifferenz zwischen den beiden Blendenöffnungen | 0,26 bar |
| --- | --- |
| Volumenstrom | 1100 ml/min |
| Anströmung | 4,5 ml/cm$^2$min |
| Wasserzudosierung zum Dieselkraftstoff | 1500 ppm $\pm$ 170 ppm |
| Mittlere Tröpfchengröße | 60 $\mu$m |

Beispiel 1 (Erfindung)

Nach dem allgemein bekannten Verfahren zur Papierherstellung wurde in einer Papiermaschine eine Papierbahn aus 100 % Zellulose erzeugt. In einem getrennten Arbeitsschritt wurde dieses Papier auf der Siebseite (dichtere Seite) mit einer methanolischen Lösung eines hydrophilen Resolharzes der Bezeichnung Prefere 94 3191 P, erhältlich bei der Firma Dynea-Erkner, Erkner, und auf der Gegenseite mit einer methanolischen Lösung eines hydrophoben Resolharz Prefere 94 3193 ebenfalls von der Firma Dynea-Erkner, Erkner imprägniert und anschließend getrocknet. Vor der Imprägnierung wurde dem Resolharz 91 3193 zur Veringerung der Oberflächenenergie ein Silikonharz zugemischt. Der Anteil des Silikonharzes betrug 0,3 Gew.% bezogen auf das trockene Resolharz Prefere 91 3193. Das Silikonharz ist unter der Bezeichnung Silres MSE 100 von der Firma Wacker, Burghausen zu beziehen. Der Harzgehalt des ersten Bindemittels betrug 8 % und der Gesamtharzgehalt betrug 16 %.

An diesem Filtermaterial wurde die Flächenmasse, die Luftdurchlässigkeit, die Dicke, die Tropfeneinsinkzeit der beiden Seiten und die Wasserabscheidung nach ISO 16332 bestimmt. Zur Bestimmung der Tropfeneinsinkzeit wurde ein Gemisch aus 40 Vol.% Methanol und 60 Vol.% destilliertem Wasser verwendet. Bei der Bestimmung der Wasserabscheidung wurde die Seite mit der geringeren Tropfeneinsinkzeit angeströmt. Das Ergebnis ist in Tabelle 2 dargestellt.

Beispiel 2 (Erfindung)

Beispiel 2 entspricht dem Beispiel 1, nur dass auf die Seite mit der geringeren Tropfeneinsinkzeit zusätzlich eine Lage Meltblownvlies aufgeklebt wurde. Das Meltblownvlies hatte eine Flächenmasse von 80 g/m$^2$, eine Luftdurchlässigkeit von 200 l/m$^2$s, eine Dicke von 350 $\mu$m. Die Fasern des Meltblownvlieses bestanden aus Polyamid. Als Kleber wurde 5 g/m$^2$ eines reaktiven, Einkomponenten Polyurethanklebers des Typs Kleiberit PUR 700.7 der Firma Klebchemie, Weingarten, verwendet.

An diesem Filtermaterial wurde die Flächenmasse, die Luftdurchlässigkeit, die Dicke, die Tropfeneinsinkzeit der beiden Seiten des Papiers und die Wasserabscheidung nach ISO 16332 bestimmt. Zur Bestimmung der Tropfeneinsinkzeit wurde ein Gemisch aus 40 Vol.% Methanol und 60 Vol.% destilliertem Wasser verwendet. Bei der Bestimmung der Wasserabscheidung wurde die Seite mit dem Meltblownvlies angeströmt. Das Ergebnis ist in Tabelle 2 dargestellt.

Beispiel 3 (Erfindung)

Beispiel 3 entspricht dem Beispiel 1, nur dass auf die Seite mit der höheren Tropfeneinsinkzeit zusätzlich eine Lage Meltblownvlies aufgeklebt wurde. Das Meltblownvlies hatte eine Flächenmasse von 80 g/m$^2$, eine Luftdurchlässigkeit von 200 l/m$^2$s, eine Dicke von 350 $\mu$m. Die Fasern des Meltblownvlieses bestanden aus Polyamid. Als Kleber wurde 5 g/m$^2$ eines reaktiven, Einkomponenten Polyurethanklebers des Typs Kleiberit PUR 700.7 der Firma Klebchemie, Weingarten verwendet.

An diesem Filtermaterial wurde die Flächenmasse, die Luftdurchlässigkeit, die Dicke, die Tropfeneinsinkzeit der beiden Seiten des Papiers und die Wasserabscheidung nach ISO 16332 bestimmt. Zur Bestimmung der Tropfeneinsinkzeit wurde ein Gemisch aus 40 Vol.% Methanol und 60 Vol.% destilliertem Wasser verwendet. Bei der Bestimmung der Wasserabscheidung wurde die Seite mit dem Meltblownvlies angeströmt. Das Ergebnis ist in Tabelle 2 dargestellt.

Beispiel 4 (Vergleichsbeispiel)

Nach dem allgemein bekannten Verfahren zur Papierherstellung wurde in einer Papiermaschine eine Papierbahn aus 100 % Zellulose erzeugt. In einem getrennten Arbeitsschritt wurde dieses Papier mit einer methanolischen Lösung eines hydrophoben Resolharz Prefere 94 3193 ebenfalls von der Firma Dynea-Erkner, Erkner imprägniert und anschließend getrocknet. Vor der Imprägnierung wurde dem Resolharz 91 3193 zur Veringerung der Oberflächenenergie ein Silikonharz zugemischt. Der Anteil des Silikonharzes betrug 0,3 Gew.% bezogen auf das trockene Resolharz Prefere 91 3193. Das Silikonharz ist unter der Bezeichnung Silres MSE 100 von der Firma Wacker, Burghausen zu beziehen. Der Harzgehalt betrug 15 %.

An diesem Filtermaterial wurde die Flächenmasse, die Luftdurchlässigkeit, die Dicke, die Tropfeneinsinkzeit der beiden Seiten und die Wasserabscheidung nach ISO 16332 bestimmt. Zur Bestimmung der Tropfeneinsinkzeit wurde ein Gemisch aus 40 Vol.% Methanol und 60 Vol.% destilliertem Wasser verwendet. Bei der Bestimmung der Wasserabscheidung wurde die Oberseite (offenere Seite) angeströmt. Das Ergebnis ist in Tabelle 2 dargestellt.

Tabelle 2

|  | Beispiel 1 (Erfindung) | Beispiel 2 (Erfindung) | Beispiel 3 (Erfindung) | Beispiel 4 (Erfindung) |
|---|---|---|---|---|
| Flächenmasse nach DIN EN ISO 536 | 245 g/m$^2$ | 332 g/m$^2$ | 332 g/m$^2$ | 243 g/m$^2$ |
| Luftdurchlässigkeit nach DIN EN ISO 9237 | 9,5 l/m$^2$s | 10,0 l/m$^2$s | 10,3 l/m$^2$s | 9,0 l/m$^2$s |
| Dicke nach DIN EN ISO 534 | 0,5 mm | 0,74 mm | 0,74 mm | 0,5 mm |
| Tropfeneinsinkzeit der Siebseite nach AATCC 118 | 48 s | 48 s | 48 s | 127 s |
| Tropfeneinsinkzeit der Oberseite nach AATCC 118 | 119 s | 119 s | 119 s | 123 s |
| Wasserabscheidung nach ISO 16332 | 80 % | 100 % | 90 % | 52 % |

An den Ergebnissen ist klar zu erkennen, dass mit dem erfindungsgemäßen Filtermaterial in Beispiel 1 eine deutliche Verbesserung hinsichtlich Wasserabscheidung verglichen mit dem Vergleichsbeispiel erzielt wird. Durch die Kombination des erfindungsgemäßen Filtermaterials aus Beispiel 1 mit einem Meltblownvlies (Beispiel 2 und 3) kann die Wasserabscheidung nochmals deutlich verbessert werden.

**Patentansprüche**

1. Filtermaterial für die Abtrennung von Flüssigkeiten aus Fluidströmen, umfassend ein nass- oder trockengelegtes Vlies, Gewebe oder einen offenzelligen Schaum, wobei das Filtermaterial eine erste Seite und eine zweite, gegenüberliegende Seite aufweist, **dadurch gekennzeichnet, dass** die beiden gegenüberliegenden Seiten des Filtermaterials mit zwei unterschiedlichen Bindemitteln in einer Weise imprägniert sind, dass die erste Seite des Filtermaterials eine höhere Oberflächenenergie und damit eine kürzere Tropfeneinsinkzeit aufweist als die zweite, gegenüberliegende Seite.

2. Filtermaterial nach Anspruch 1, **dadurch gekennzeichnet, dass** die Tropfeneinsinkzeit der ersten Seite höchstens 80 % der Tropfeneinsinkzeit der zweiten Seite beträgt.

3. Filtermaterial nach Anspruch 1 oder 2, **dadurch gekennzeichnet, dass** die Tropfeneinsinkzeit der ersten Seite höchstens 50 % der Tropfeneinsinkzeit der zweiten Seite beträgt.

4. Filtermaterial nach einem der vorhergehenden Ansprüche, **dadurch gekennzeichnet, dass** mindestens eines der zwei unterschiedlichen Bindemittel das Filtermaterial mindestens zur Hälfte und höchstens zu drei Vierteln seiner Dicke durchdringt.

5. Filtermaterial nach einem der Ansprüche 1 bis 3, **dadurch gekennzeichnet, dass** mindestens eines der zwei unterschiedlichen Bindemittel das Filtermaterial vollständig durchdringt.

6. Filtermaterial nach einem der vorhergehenden Ansprüche, **dadurch gekennzeichnet, dass** das Bindemittel der ersten Seite des Filtermaterials mit der kürzeren Tropfeneinsinkzeit eine halogen- und silikonfreie Polymerdispersion, einen Polyvinylalkohol, ein Melamin-Formaldehyd-Harz, ein Harnstoff-Formaldehyd-Harz, ein hydrophiles Phenolharz, ein hydrophiles Epoxidharz oder eine Mischung daraus umfasst.

7. Filtermaterial nach Anspruch 6, **dadurch gekennzeichnet, dass** das Bindemittel mindestens 0, 01 - 5 Gew.% eines Additivs zur Erhöhung der Oberflächenenergie enthält.

8. Filtermaterial nach Anspruch 7, **dadurch gekennzeichnet, dass** das Additiv mit dem Bindemittel der ersten Seite vernetzbar oder in den bei der Filtration verwendeten Fluiden unlöslich ist.

9. Filtermaterial nach einem der vorhergehenden Ansprüche, **dadurch gekennzeichnet, dass** das Bindemittel der zweiten Seite des Filtermaterials mit der längeren Tropfeneinsinkzeit und damit mit der niedrigeren Oberflächenenergie eine halogenhaltige Polymerdispersion, eine silikonhaltige Polymerdispersion, ein Polyvinylchloridharz, ein Polyvinylidenchloridharz, ein Polyvinylidenfluoridharz, ein Siliconharz, ein Phenolharz, ein Epoxidharz oder eine Mischung daraus umfasst.

10. Filtermaterial nach Anspruch 9, **dadurch gekennzeichnet, dass** das Bindemittel der zweiten Seite 0,01 - 10 Gew.% eines Additivs zur Verringerung der Oberflächenenergie enthält.

11. Filtermaterial nach Anspruch 10, **dadurch gekennzeichnet, dass** das Additiv mit dem Bindemittel der zweiten Seite vernetzbar oder in den bei der Filtration verwendeten Fluiden unlöslich ist.

12. Filtermaterialkombination mit einem Filtermaterial nach einem der vorhergehenden Ansprüche, **dadurch gekennzeichnet, dass** sich auf zumindest einer Seite des Filtermaterials eine weitere Vlieslage befindet.

13. Filtermaterialkombination nach Anspruch 12, **dadurch gekennzeichnet, dass** die weitere Vlieslage ein Meltblownvlies oder ein Spinnvlies umfasst, das eine Flächenmasse von 10 g/m$^2$ - 150 g/m$^2$ , eine Dicke von 0,1 mm - 1,0 mm und eine Luftdurchlässigkeit von 10 l/m$^2$s-2000 l/m$^2$s besitzt.

14. Filtermaterialkombination nach Anspruch 12, **dadurch gekennzeichnet, dass** die weitere Vlieslage ein trockengelegtes Stapelfaservlies umfasst, das eine Flächenmasse von 50 g/m$^2$ - 250 g/m$^2$, eine Dicke von 0,3 mm - 2,0 mm und eine Luftdurchlässigkeit von 50 l/m$^2$s - 3000 l/m$^2$s besitzt.

15. Filtermaterialkombination nach einem der Ansprüche 12 bis 14, **dadurch gekennzeichnet, dass** sich die weitere Vlieslage auf der Seite mit der längeren Tropfeneinsinkzeit befindet.

16. Filtermaterialkombination nach einem der Ansprüche 12 bis 14, **dadurch gekennzeichnet, dass** sich die weitere Vlieslage auf der Seite mit der kürzeren Tropfeneinsinkzeit befindet.

17. Filterelement mit einem Filtermaterial nach einem der Ansprüche 1 bis 11 oder einer Filtermaterialkombination nach einem der Ansprüche 12 bis 16.


**Claims**

1. Filter material for isolating liquids from fluid streams, comprising a wetlaid or drylaid non-woven, woven or open-cell foam, the filter material having a first side and a second, opposing side, **characterised in that** the two opposing sides of the filter material are impregnated with two different binders in such a way that the first side of the filter material has a higher surface energy and thus a shorter drop absorption time than the second, opposing side.

2. Filter material according to claim 1, **characterised in that** the drop absorption time of the first side is at most 80 % of the drop absorption time of the second side.

3. Filter material according to either claim 1 or claim 2, **characterised in that** the drop absorption time of the first side is at most 50 % of the drop absorption time of the second side.

4. Filter material according to any of the preceding claims, **characterised in that** at least one of the two different binders penetrates the filter material to at least halfway and at most three-quarters of the way through the thickness thereof.

**5.** Filter material according to any of claims 1 to 3, **characterised in that** at least one of the two different binders fully penetrates the filter material.

**6.** Filter material according to any of the preceding claims, **characterised in that** the binder of the first side of the filter material having the shorter drop absorption time comprises a halogen-free and silicone-free polymer dispersion, a polyvinyl alcohol, a melamine formaldehyde resin, a urea-formaldehyde resin, a hydrophilic phenolic resin, a hydrophilic epoxy resin, or a mixture thereof.

**7.** Filter material according to claim 6, **characterised in that** the binder contains at least 0.01 - 5 wt.% of an additive for increasing the surface energy.

**8.** Filter material according to claim 7, **characterised in that** the additive can be crosslinked with the binder of the first side or is insoluble in the fluids used for the filtration.

**9.** Filter material according to any of the preceding claims, **characterised in that** the binder of the second side of the filter material having the longer drop absorption time and thus the lower surface energy comprises a halogen-containing polymer dispersion, a silicone-containing polymer dispersion, a polyvinyl chloride resin, a polyvinylidene chloride resin, a polyvinylidene fluoride resin, a silicone resin, a phenolic resin, an epoxy resin, or a mixture thereof.

**10.** Filter material according to claim 9, **characterised in that** the binder of the second side contains from 0.01 - 10 wt.% of an additive for reducing the surface energy.

**11.** Filter material according to claim 10, **characterised in that** the additive can be crosslinked with the binder of the second side or is insoluble in the fluids used for the filtration.

**12.** Filter material combination comprising a filter material according to any of the preceding claims, **characterised in that** at least one side of the filter material has a further non-woven layer.

**13.** Filter material combination according to claim 12, **characterised in that** the further non-woven layer comprises a meltblown non-woven or a spunlaid non-woven which has a grammage of from 10 g/m$^2$ - 150 g/m$^2$, a thickness of from 0.1 mm - 1.0 mm, and an air permeability of from 10 l/m$^2$s - 2000 l/m$^2$s.

**14.** Filter material combination according to claim 12, **characterised in that** the further non-woven layer comprises a drylaid staple fibre non-woven which has a grammage of from 50 g/m$^2$ - 250 g/m$^2$, a thickness of from 0.3 mm - 2.0 mm, and an air permeability of from 50 l/m$^2$s - 3000 l/m$^2$s.

**15.** Filter material combination according to any of claims 12 to 14, **characterised in that** the further non-woven layer is on the side having the longer drop absorption time.

**16.** Filter material combination according to any of claims 12 to 14, **characterised in that** the further non-woven layer is on the side having the shorter drop absorption time.

**17.** Filter element comprising a filter material according to any of claims 1 to 11 or a filter material combination according to any of claims 12 to 16.

**Revendications**

**1.** Matériau filtrant pour séparer des liquides hors de courants de fluide, comportant un non-tissé, un tissu ou une mousse à cellules ouvertes, obtenu(e) par voie sèche ou humide, le matériau filtrant présentant une première face et une seconde face opposée, **caractérisé en ce que** les deux faces opposées du matériau filtrant sont imprégnées de deux liants différents de telle sorte que la première face du matériau filtrant présente une énergie superficielle plus importante et donc un temps de pénétration de goutte plus court que la seconde face opposée.

**2.** Matériau filtrant selon la revendication 1, **caractérisé en ce que** le temps de pénétration de goutte de la première face est au maximum 80 % du temps de pénétration de goutte de la seconde face.

**3.** Matériau filtrant selon la revendication 1 ou 2, **caractérisé en ce que** le temps de pénétration de goutte de la première face est au maximum 50 % du temps de pénétration de goutte de la seconde face.

**4.** Matériau filtrant selon l'une des revendications précédentes, **caractérisé en ce que** l'un au moins des deux liants différents pénètre le matériau filtrant au minimum sur la moitié et au maximum sur trois quarts de son épaisseur.

**5.** Matériau filtrant selon l'une des revendications 1 à 3, **caractérisé en ce que** l'un au moins des deux liants différents pénètre complètement le matériau filtrant.

**6.** Matériau filtrant selon l'une des revendications précédentes, **caractérisé en ce que** le liant de la première face du matériau filtrant présentant le temps de pénétration de goutte plus court comprend une dispersion polymérique exempte d'halogène et de silicone, un alcool polyvinylique, une résine mélamine/formaldéhyde, une résine urée-formaldéhyde, une résine phénolique hydrophile, une résine époxyde hydrophile ou un mélange de ceux-ci.

**7.** Matériau filtrant selon la revendication 6, **caractérisé en ce que** le liant contient au moins 0,01 à 5 % en poids d'un additif pour augmenter l'énergie superficielle.

**8.** Matériau filtrant selon la revendication 7, **caractérisé en ce que** l'additif est réticulable avec le liant de la première face ou insoluble dans les fluides utilisés lors du filtrage.

**9.** Matériau filtrant selon l'une des revendications précédentes, **caractérisé en ce que** le liant de la seconde face du matériau filtrant présentant le temps de pénétration de goutte plus long et donc une énergie superficielle plus faible comprend une dispersion polymérique halogénée, une dispersion polymérique siliconée, une résine de chlorure de polyvinyle, une résine de chlorure de polyvinylidène, une résine de fluorure de polyvinylidène, une résine de silicone, une résine phénolique, une résine époxyde ou un mélange de celles-ci.

**10.** Matériau filtrant selon la revendication 9, **caractérisé en ce que** le liant de la seconde face comprend 0,01 à 10 % en poids d'un additif pour réduire l'énergie superficielle.

**11.** Matériau filtrant selon la revendication 10, **caractérisé en ce que** l'additif est réticulable avec le liant de la seconde face ou est insoluble dans les fluides utilisés lors du filtrage.

**12.** Combinaison de matériau filtrant avec un matériau filtrant selon l'une des revendications précédentes, **caractérisée en ce qu'**une autre couche de non-tissé se trouve sur au moins une face du matériau filtrant.

**13.** Combinaison de matériau filtrant selon la revendication 12, **caractérisée en ce que** l'autre couche de non-tissé comprend un non-tissé meltblown ou un non-tissé filé-lié qui possède une masse surfacique de 10 g/m$^2$ à 150 g/m$^2$, une épaisseur de 0,1 mm à 1,0 mm et une perméabilité à l'air de 10 l/m$^2$s à 2000 l/m$^2$s.

**14.** Combinaison de matériau filtrant selon la revendication 12, **caractérisée en ce que** l'autre couche de non-tissé comprend un non-tissé de fibres discontinues obtenu par voie sèche qui possède une masse surfacique de 50 g/m$^2$ à 250 g/m$^2$, une épaisseur de 0,3 mm à 2,0 mm et une perméabilité à l'air de 50 l/m$^2$s à 3000 l/m$^2$s.

**15.** Combinaison de matériau filtrant selon l'une des revendications 12 à 14, **caractérisée en ce que** l'autre couche de non-tissé se trouve sur la face présentant le temps de pénétration de goutte plus long.

**16.** Combinaison de matériau filtrant selon l'une des revendications 12 à 14, **caractérisée en ce que** l'autre couche de non-tissé se trouve sur la face présentant le temps de pénétration de goutte plus court.

**17.** Élément filtrant comportant un matériau filtrant selon l'une des revendications 1 à 11 ou une combinaison de matériau filtrant selon l'une des revendications 12 à 16.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3890123 A1
- EP 1606037 A1
- DE 102009006586 A1
- US 4340563 A
- US 3802817 A
- US 3855046 A
- US 3692618 A
- US 3171820 A
- DE 1504551 A
- DE 601435 A
- GB 1111928 A

**In der Beschreibung aufgeführte Nicht-Patentliteratur**

- **W. ALBRECHT ; H. FUCHS.** Vliesstoffe. Wiley-VCH, 2012
- **VAN A. WENTE.** Superfine Themoplastic Fibers. *Industrial Engineering Chemestry,* vol. 48, 1342-1346